# EUROPÄISCHE PATENTSCHRIFT

(11) **EP 0 547 663 B1**
(45) Veröffentlichungstag und Bekanntmachung des Hinweises auf die Patenterteilung: **07.06.1995**
(21) Anmeldenummer: 92203780.9
(22) Anmeldetag: 04.12.1992
(51) Int. Cl.: B01J 21/06, B01J 23/22, B01J 23/28, B01J 23/30, B01J 23/72, B01D 53/94

(54) **Verfahren zur Herstellung von TiO2-haltigen Pellets und deren Verwendung**
Process for production of TiO2-containing pellets and the use of them
Procédé pour la production de pastilles contenant du TiO2 et leur utilisation

(30) Priorität: 19.12.1991 DE 4141936
(43) Veröffentlichungstag der Anmeldung: 23.06.1993
(73) Patentinhaber: METALLGESELLSCHAFT Aktiengesellschaft, 60015 Frankfurt (DE)
(72) Erfinder: Griebler, Wolf-Dieter, Dr., W-4130 Moers 1 (DE); Amirzadeh-Asl, Djamschid, Dr., W-4130 Moers 1 (DE); Becker, Bernhard, W-4150 Krefeld (DE)

(56) Entgegenhaltungen:
- DD-A- 265 564
- DE-A- 3 701 984

## Beschreibung

Die Erfindung bezieht sich auf ein Verfahren zur Herstellung von TiO₂-haltigen Pellets und deren Verwendung.

In der DE-OS 3701984 wird ein verfahren zur Herstellung von Katalysatoren beschrieben, bei dem Metatitansäure mit Zusatzstoffen, wie beispielsweise löslichen Vanadiumverbindungen in einem sogenannten hydrothermalen Prozeßschritt bei ca. 200°C und 15 bar agglomeriert wird. Nach Dekantieren des Lösungsmittels wird das so erhaltene Produkt gewaschen und anschließend getrocknet. Die so gewonnene Masse kann mit Bindemitteln vermischt und nach entsprechender Formung zu Granulaten verarbeitet werden. Das Aushärten der Granulate erfolgt vorzugsweise bei 500°C. Bei diesem bekannten verfahren ist nachteilig, daß die Zugabe von Zusatzstoffen vor der Hydrothermalbehandlung und ggf. eine Zugabe von Bindemitteln bei der Herstellung der Granulate erforderlich ist, durch deren Eigenschaften die katalytischen Eigenschaften des Endprodukts verschlechtert werden können.

Der Erfindung liegt daher die Aufgabe zugrunde, ein Verfahren zur Herstellung von TiO₂-haltigen Pellets zu schaffen, bei dem auf die Zugabe von Zusatzstoffen und Bindemitteln verzichtet werden kann und die Pellets eine relativ hohe Bruchfestigkeit aufweisen, so daß sie vielseitig eingesetzt werden können.

Die der Erfindung zugrundeliegende Aufgabe wird durch ein Verfahren zur Herstellung von TiO₂-haltigen Pellets gelöst, bei dem Metatitansäure oder Orthotitansäure ohne Zusatzstoffe bei 120 bis 250°C und 2 bis 40 bar für 0,1 bis 30 h in Gegenwart von Wasser behandelt und danach getrocknet wird und bei dem das hydrothermal behandelte Produkt anschließend in einer Pelletiervorrichtung unter Zugabe von Wasser pelletiert wird und die erhaltenen Pellets bei 100 bis 1000°C behandelt werden.

Bei Metatitansäure handelt es sich um einen chemischen Stoff der Formel TiO(OH)₂, der bei dem zur Herstellung von TiO₂ angewendeten Sulfatverfahren als Zwischenprodukt anfällt. Beim Sulfatverfahren wird Ilmenit mit 90%-iger H₂SO₄ aufgeschlossen, der entstandene Aufschlußkuchen in Wasser gelöst und die Lösung geklärt. Durch Zugabe von Eisenschrott wird gelöstes dreiwertiges Eisen in die zweiwertige Form überführt, da Fe³⁺ in nachteiliger Weise als Fe(OH)₃ zusammen mit der Metatitansäure ausfallen und an dieser adsorbiert werden würde. Nach dem Erkalten der Lösung fällt FeSO₄ · 7H₂O aus, das aus dem System entfernt wird. Bei der anschließenden Hydrolyse wird das TiOSO₄ in Metatitansäure überführt. Die eigentliche Überführung von Metatitansäure in TiO₂ erfolgt beim Sulfatverfahren durch Kalzination im Drehrohrofen. Bei Orthotitansäure handelt es sich um einen chemischen Stoff der Formel Ti(OH)₄. Orthotitansäure geht bei längerer Lagerung unter Abspaltung von H₂O in Metatitansäure über.

Als Pelletiervorrichtung kann bei dem erfindungsgemäßen Verfahren beispielsweise ein Granulierteller oder eine Drehtrommel verwendet werden, wobei die hydrothermal behandelte Metatitansäure oder Orthotitansäure auf die jeweilige Pelletiervorrichtung aufgegeben und unter Aufsprühen von Wasser granuliert wird.

Es hat sich in überraschender Weise gezeigt, daß die nach dem erfindungsgemäßen Verfahren hergestellten Pellets eine relativ hohe Bruchfestigkeit aufweisen, die durchschnittlich bei 3 bis 100 N liegt. Die nach dem erfindungsgemäßen Verfahren hergestelltten Pellets weisen eine solch hohe Bruchfestigkeit auf, daß sie auch als Bettmaterial in einer stationären Wirbelschicht eingesetzt werden können. Unter der Bruchfestigkeit ist dabei diejenige Kraft zu verstehen, die auf die Pellets ausgeübt werden muß, um sie durch Druckeinwirkung zu zerstören.

Eine bevorzugte Ausgestaltung der Erfindung besteht darin, daß die bei 100 bis 1000°C behandelten Pellets in einem weiteren Schritt mit Metallsalzlösungen getränkt und danach erneut bei 100 bis 1000°C behandelt werden. Als Metallsalzlösungen können dabei wäßrige Lösungen verwendet werden, die Metallsalze in einer Konzentration von 5 bis 200 g/l enthalten. Werden die Pellets mit Metallsalzlösungen getränkt und danach erneut bei 100 bis 1000°C behandelt, so lassen sich Endprodukte herstellen, die insbesondere bei katalytischen Prozessen und bei der Absorption von Schadstoffen aus Abgasen eingesetzt werden können.

Gemäß einer weiteren Ausgestaltung der Erfindung enthalten die Metallsalzlösungen V- und/oder W- und/oder Mo- und/oder Si- und/oder Al- und/oder Cu-Ionen. Die mit diesen Metallsalzlösungen getränkten Pellets können bei relativ vielen katalytischen Prozessen als Katalysator eingesetzt werden.

Gemäß einer bevorzugten Ausgestaltung der Erfindung werden die Pellets als Sorptionsmittel zur Entfernung von F₂ oder HF aus Abgasen verwendet. Auf diese Weise läßt sich besonders F₂ relativ leicht und vollständig aus Abgasen entfernen. Dabei laufen im einzelnen die folgenden chemischen Reaktionen ab, wobei die benötigte Wassermenge durch das am TiO₂ sorbierte Kristallwasser bereitgestellt wird:

2 F₂ + H₂O ----> 4HF + O₂

2 HF + TiO₂ ----> TiOF₂ + H₂O

Die Reaktion kann auch mit den am Titan gebundenen Hydroxy-Gruppen verlaufen:

≡ Ti-OH + F₂ ----> ≡ Ti-F + HF + 1/2 O₂

≡ Ti-OH + HF₂ ----> ≡ Ti-F + H₂O

Die relativ hohe Bruchfestigkeit der hergestellten Pellets erlaubt den Einsatz als Sorptionsmittel in der stationären Wirbelschicht.

Nach einer weiteren bevorzugten Ausgestaltung der Erfindung werden die Pellets als Katalysatorträger oder Katalysator zur Spaltung von halogenierten Kohlenwasserstoffen bei 300 bis 550°C oder zur Entfernung von Stickoxiden aus Abgasen durch Reduktion der Stickoxide mit NH₃ bei 350 bis 500°C verwendet.

Die Erfindung wird nachfolgend anhand des Beispiels näher erläutert:

### Beispiel:

Die beim Sulfatverfahren anfallende Metatitansäuresuspension mit 7,5 % freier und gebundener Schwefelsäure wird unter mäßigem Rühren mit einer 25%-igen Ammoniaklösung auf pH 7 neutralisiert, anschließend filtriert und mit 60°C heißem Wasser solange gewaschen, bis der Filterkuchen einen Salzgehalt von < 2 Gew-% aufweist. Die neutralisierte und gewaschene Metatitansäure wird mit einer Feststoffkonzentration von 300 g/l Wasser in einem Autoklaven 60 min bei 195°C und 15 bar behandelt. Anschließend wird die Suspension filtriert, und der Filterkuchen wird im Sprühtrockner getrocknet. Das so erhaltene Zwischenprodukt ist weiß und weist eine spezifische Oberfläche von 196 m²/g auf. Die hydrothermal behandelte Metatitansäure wird in einem Pelletierteller vorgelegt und unter Aufsprühen von Wasser pelletiert. Die erhaltenen Pellets haben eine Feuchte von 34% und werden bei 105°C getrocknet und ca. 60 min bei ca. 500°C kalziniert. Der Pelletdurchmesser beträgt 2 bis 6 mm. Die spezifische Oberfläche der Pellets liegt bei 103 m²/g. Das Porenvolumen beträgt 0,67 cm³/g. Die Druckfestigkeit der Pellets liegt bei 15 N, so daß der Einsatz in einer stationären Wirbelschicht möglich ist.

Wird die gewaschene Metatitansäure vor der Hydrothermalbehandlung direkt unter Aufsprühen von Wasser granuliert und zuletzt 60 min bei 500°C kalziniert, so entstehen Pellets, die keine mechanische Festigkeit aufweisen und durch die geringste Druckeinwirkung zu Pulver zerfallen. Durch eine Hydrothermalbehandlung lassen sich somit Pellets herstellen, die eine relativ hohe Druckfestigkeit aufweisen, wobei auf den Einsatz von Zusatzstoffen und/oder Bindemitteln verzichtet werden kann.

## Patentansprüche

1. Verfahren zur Herstellung von TiO₂-haltigen Pellets, bei dem Metatitansäure oder Orthotitansäure ohne Zusatzstoffe bei 120 bis 250°C und 2 bis 40 bar 0,1 bis 30 h in Gegenwart von Wasser behandelt und danach getrocknet wird und bei dem das hydrothermal behandelte Produkt anschließend in einer Pelletiervorrichtung unter Zugabe von Wasser pelletiert wird und die erhaltenen Pellets bei 100 bis 1000°C behandelt werden.

2. Verfahren nach Anspruch 1, bei dem die bei 100 bis 1000°C behandelten Pellets in einem weiteren Schritt mit Metallsalzlösungen getränkt und danach erneut bei 100 bis 1000°C behandelt werden.

3. Verfahren nach Anspruch 2, bei dem die Metallsalzlösungen V- und/oder W- und/oder Mo- und/oder Si- und/oder Al- und/oder Cu-Ionen enthalten.

4. Verwendung der Pellets hergestellt nach Anspruch 1 oder 2 als Sorptionsmittel zur Entfernung von F₂ oder HF aus Abgasen.

5. Verwendung der Pellets hergestellt nach Anspruch 1 oder 2 als Katalysatorträger oder Katalysator zur Spaltung von halogenierten Kohlenwasserstoffen bei 300 bis 550°C oder zur Entfernung von Stickoxiden aus Abgasen durch Reduktion von Stickoxiden mit NH₃ bei 350 bis 500°C.

## Claims

1. A method for producing TiO₂-containing pellets in which metatitanic acid or orthotitanic acid is treated without additives at 120 to 250°C and 2 to 40 bar for 0.1 to 30 hours in the presence of water and are then dried and in which the hydrothermally-treated product is then pelletised in a pelletising apparatus with the addition of water and the resulting pellets are treated at 100 to 1000°C.

2. A method according to Claim 1, in which the pellets treated at 100 to 1000°C in a further step are impregnated with metal salt solutions and are then retreated at 100 to 1000°C.

3. A method according to Claim 2, in which the metal salt solutions contain V and/or W and/or Mo and/or Si and/or Al and/or Cu ions.

4. The use of the pellets produced according to Claim 1 or 2 as sorbents for removing F₂ or HF from exhaust gases.

5. The use of the pellets produced according to Claim 1 or 2 as catalyst supports or catalysts for cleaving halogenated hydrocarbons at 300 to 550°C or for removing nitrogen oxides from exhaust gases by reduction of nitrogen oxides with NH₃ at 350 to 500°C.

## Revendications

1. Procédé pour fabriquer des pastilles contenant du TiO₂, dans lequel on traite à une température de 120 à 250°C, sous une pression de 2 à 40 bar pendant 0,1 à 30 heures et en présence d'eau, de l'acide métatitanique ou de l'acide orthotitanique sans additif, puis on sèche, le produit ayant subi un traitement hydrothermal étant ensuite pastillé dans un dispositif de pastillage avec addition d'eau, les pastilles obtenues étant traitées à une température de 100 à 1000°C.

2. Procédé selon la revendication 1, dans lequel les pastilles traitées à une température de 100 à 1000°C sont, au cours d'une étape supplémentaire, imprégnées de solutions de sels métalliques, pour être ensuite de nouveau traitées à une température de 100 à 1000°C.

3. Procédé selon la revendication 2, dans lequel les solutions de sels métalliques contiennent des ions V et/ou W et/ou Mo et/ou Si et/ou Al et/ou Cu.

4. Utilisation des pastilles fabriquées selon la revendication 1 ou 2, comme sorbant pour éliminer F₂ ou HF des effluents gazeux.

5. Utilisation des pastilles fabriquées selon la revendication 1 ou 2 comme support de catalyseur ou catalyseur pour éliminer des hydrocarbures halogénés à une température de 300 à 550°C ou pour éliminer des oxydes d'azote à partir d'effluents gazeux par réduction d'oxydes d'azote avec du NH₃ à une température de 350 à 500°C.
